# EUROPÄISCHE PATENTSCHRIFT

(11) **EP 0 665 255 B1**
(45) Veröffentlichungstag und Bekanntmachung des Hinweises auf die Patenterteilung: **30.05.2001**
(21) Anmeldenummer: 95100515.6
(22) Anmeldetag: 16.01.1995
(51) Int. Cl.: C08G 69/50, C08G 71/02, C08G 83/00, C08G 12/46, C08G 16/06, D06P 5/08, D06P 5/00, D06P 1/52, D06M 15/37

(54) **N-Methylol-Derivate von Polykondensaten auf Basis von Harnstoffen und Polyaminen**
N-Methylol derivates of polycondensates based on ureas and polyamines
Dérivés N-méthylos de polycondensates à base d'urées et de polyamines

(30) Priorität: 28.01.1994 DE 4402532
(43) Veröffentlichungstag der Anmeldung: 02.08.1995
(73) Patentinhaber: DyStar Textilfarben GmbH & Co. Deutschland KG, 60318 Frankfurt am Main (DE)
(72) Erfinder: Hendricks, Udo-Winfried, Dr., D-51519 Odenthal (DE); Heinen, Ralf, D-50969 Köln (DE)

(56) Entgegenhaltungen:
- EP-A- 0 151 370
- EP-A- 0 259 251
- DE-A- 1 595 336
- DE-A- 3 035 940
- DE-A- 3 217 835
- US-A- 2 616 874
- US-A- 3 839 291
- CHEMICAL ABSTRACTS, vol. 81, no. 12, 23.September 1974 Columbus, Ohio, US; abstract no. 65159, XP002020714 & JP-B-49 001 675 (SUMITOMO CHEM. CO., LTD.) 16.Januar 1974

## Beschreibung

Die vorliegende Erfindung betrifft N-Methylol-Derivate von Polykondensaten aus basischen Harnstoffen, Polyaminen und bifunktionellen Alkylierungsmitteln, ein Verfahren zu ihrer Herstellung und ihre Verwendung zur Verbesserung der Naßechtheiten von Färbungen und Drucken mit Reaktiv- und Direktfarbstoffen auf Cellulose und Cellulose-Mischgeweben.

Aus DE-A 1 595 336 ist ein Verfahren zur Herstellung von Polykondensaten bekannt, durch Kondensation von Harnstoff mit einem Polyamin und nachfolgender Umsetzung mit Epichlorhydrin und Formaldehyd. Die Verbindungen werden eingesetzt zur Verbesserung der Naßechtheit von Papier.

Gefunden wurden neue N-Methylol-Derivate von Polykondensaten mit quaternären N-Atomen aus
A) basischen Harnstoffen der Formel

   HN(R¹)-CO-N(R²)-X¹-N(R³, R⁴) (I),

   in der
   - X¹: C₂-C₄-Alkylen bedeutet,
   - R¹ und R²: unabhängig voneinander Wasserstoff oder C₁-C₄-Alkyl darstellen oder R¹ und R² gemeinsam Ethylen-1,2 oder Trimethylen bedeuten und
   - R³ und R⁴: unabhängig voneinander Wasserstoff, C₁-C₄-Alkyl oder C₂-C₄-Hydroxyalkyl darstellen, wobei weiterhin R³ den Rest -X¹-N(R²)-CO-NHR¹ bedeuten kann und wobei R³ und R⁴ gemeinsam einen der Reste -CH₂CH₂-O-CH₂CH₂- oder -CH₂CH₂-N(R⁵)-CH₂CH₂- bedeuten können, worin R⁵ Wasserstoff, C₁-C₄-Alkyl, C₂-C₄-Hydroxyalkyl, den Rest -X¹-N(R²)-CO-NHR¹ oder den Rest -CO-NH₂ bedeutet,
B) Polyaminen der Formel

   (R⁶,R⁷)N-X²-N(R⁸,R⁹) (II),

   in der
   - X²: C₂-C₆-Alkylen bedeutet, das durch -O-, -NR¹⁰-. wobei R¹⁰ für Wasserstoff oder C₁-C₄-Alkyl steht, oder durch -NH-CO-NH- unterbrochen sein kann, und
   - R⁶, R⁷, R⁸ und R⁹: unabhängig voneinander für Wasserstoff, C₁-C₄-Alkyl oder C₂-C₄-Aminoalkyl stehen und R⁶ und R⁷ gemeinsam und unabhängig hiervon R⁸ und R⁹ gemeinsam oder R⁶ und R⁸ gemeinsam und unabhängig hiervon R⁷ und R⁹ gemeinsam Ethylen-1,2 oder Trimethylen bedeuten können, und
C) bifunktionellen Alkylierungsmitteln.

Bevorzugte N-Methylol-Derivate dieser Polykondensate sind solche, in denen als basische Harnstoffe solche der Formel

H₂N-CO-NH-X¹-N(R¹³,R¹⁴) (III)

eingesetzt werden, in der
- X¹: C₂-C₄-Alkylen bedeutet und
- R¹³ und R¹⁴: unabhängig voneinander C₁-C₃-Alkyl bedeuten und R¹³ weiterhin -X¹-NH-CO-NH₂ bedeuten kann.

Weitere bevorzugte N-Methylol-Derivate dieser Polykondensate sind solche, in denen als Polyamine solche der Formel

(R¹⁶,R¹⁷)N-X²-N(R¹⁸,R¹⁹) (IV)

eingesetzt werden, in der
- X²: C₂-C₆-Alkylen bedeutet, das durch -O-, -NR¹⁰-, wobei R¹⁰ für Wasserstoff oder C₁-C₄-Alkyl steht, oder durch -NH-CO-NH- unterbrochen sein kann, und
- R¹⁶, R¹⁷, R¹⁸ und R¹⁹: unabhängig voneinander Wasserstoff oder C₁-C₃-Alkyl bedeuten.

Die Erfindung betrifft weiterhin ein Verfahren zur Herstellung der obigen N-Methylol-Derivate von Polykondensaten, das dadurch gekennzeichnet ist, daß A) basische Harnstoffe, B) Polyamine und C) bifunktionelle Alkylierungsmittel im Molverhältnis A:B:C = 0,5-2,5:1:1,0-3,2 bei 40 bis 130°C in Gegenwart von Wasser oder polaren organischen Lösungsmitteln zur Reaktion gebracht werden und anschließend bei 40 bis 110°C und pH-Werten von 8 bis 11 mit Formaldehyd oder Formaldehyd freisetzenden Verbindungen umgesetzt werden, wobei pro Harnstoffgruppe -N(R²)-CO-NH(R¹) 0,5-1,2 Mol Formaldehyd verwendet werden.

Die Erfindung betrifft schließlich die Verwendung der obengenannten N-Methylol-Derivate von Polykondensaten zur Verbesserung der Naßechtheiten von Färbungen und Drucken mit Reaktiv- und Direktfarbstoffen auf Cellulose und Cellulose-Mischgeweben.

In den obigen Formeln bedeutet C₂-C₄- bzw. C₂-C₆-Alkylen Ethylen-1,2, Trimethylen, Tetramethylen, Pentamethylen oder Hexamethylen ebenso wie verzweigte Alkylen-Gruppen, wie Propylen-1,2 oder 1,3-Dimethyl-tetramethylen. Bevorzugt sind Ethylen-1,2 und Trimethylen.

C₁-C₄-Alkyl ist beispielsweise Methyl, Ethyl, Propyl, Isopropyl, Butyl, Isobutyl. Bevorzugt ist Methyl oder Ethyl.

C₂-C₄-Hydroxyalkyl ist beispielsweise 2-Hydroxy-ethyl, 3-Hydroxy-propyl, 2-Hydroxy-propyl oder 2-, 3- bzw. 4-Hydroxy-butyl. Bevorzugt ist 2-Hydroxy-ethyl.

C₂-C₄-Aminoalkyl ist beispielsweise 2-Amino-ethyl, 3-Amino-propyl, 2-Amino-propyl oder 2-, 3- bzw. 4-Aminobutyl. Bevorzugt ist 2-Amino-ethyl.

C₂-C₆-Alkylen in den Formeln (II) bzw. (IV) kann durch Sauerstoff oder die Gruppe -NR¹⁰- oder durch die Gruppe -NH-CO-NH- unterbrochen sein.

In der oben angegebenen Weise können auf N-Atomen angebrachte Reste gemeinsam die Ergänzung eines Ringes bilden, so daß basische Harnstoffe A bzw. Polyamine B vorliegen, die cyclische oder bicyclische Systeme darstellen.

Beispiele für basische Harnstoffe A sind

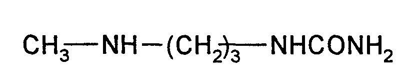

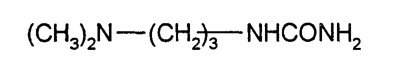

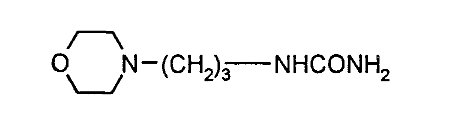

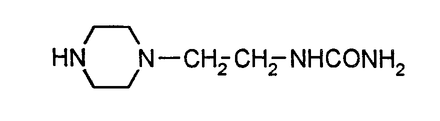

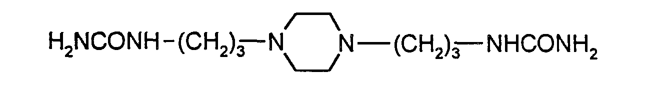

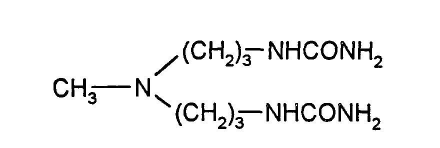

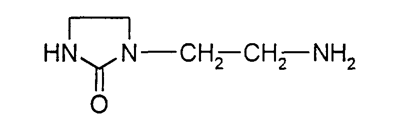

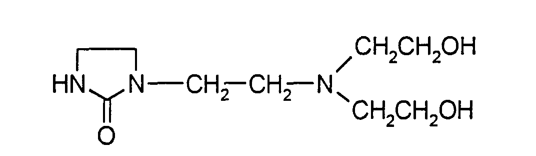

Die basischen Harnstoffe A sind bekannt oder können nach bekannten Methoden hergestellt werden, beispielsweise durch thermische Kondensation von Polyaminen mit Harnstoff unter Ammoniakabspaltung oder durch Umsetzung von Polyaminen mit Alkalicyanaten, wie beispielsweise in Houben-Weyl, Methoden der organischen Chemie, Band E4 (1983), S. 362 ff. beschrieben.

Als Beispiele für Polyamine B seien Ethylendiamin, 1,3-Diaminopropan, 1,4-Diaminobutan, 1,6-Diaminohexan, Piperazin, N,N'-Dimethylpiperazin, N,N'-Bis-(2-hydroxyethyl)-piperazin, Aminoethyl-piperazin, Diethylentriamin, Triethylentetramin, 1-Amino-3-dimethylamino-propan, 1,2-Bis-(dimethylamino)-ethan, 1,3-Bis-(dimethylamino)-propan, 1,4-Diazabicyclo(2,2,2)-octan und N,N'-Bis-(3-dimethylaminopropyl)-harnstoff genannt.

Beispiele für bifunktionelle Alkylierungsmittel C gehören der Gruppe der Dihalogenalkane, bevorzugt der α,ω-Dihalogenalkane, der Dihalogenalkene (bevorzugt α,ω-), der Dihalogenalkylether, der Dihalogenalkanole, der Epihalogenhydrine und der Bis-Epoxy-Verbindungen, bevorzugt der α,ω-Dihalogenalkane, der α,ω-Dihalogenalkene und der Epihalogenhydrine, an.

Beispiele hierfür sind 1,2-Dichlorethan, 1,2-Dichlorpropan, 1,3-Dichlorpropan, 1-Brom-3-chlorpropan, 1,4-Dichlorbutan, 1,6-Dichlorhexan, 1,4-Dichlorbuten-2, Bis(2-chlorethyl)-ether, 1,3-Dichlorpropanol-2, Epibromhydrin, Epichlorhydrin, Diglycidylether, Ethan-1,2-bis-glycidylether und Butan-1,4-bis-glycidylether.

Formaldehyd abspaltende Verbindungen sind beispielsweise Paraformaldehyd und Trioxan.

Zur Herstellung der obigen N-Methylol-Derivate der Polykondensate werden die basischen Harnstoffe A mit den Polyaminen B und den bifunktionellen Alkylierungsmitteln C im Molverhältnis A:B:C = 0,5-2,5:1:1,0-3,2, bevorzugt A:B:C = 1,5 - 2,3 : 1 : 2,0 - 3,0 bei erhöhter Temperatur umgesetzt. Als solche Temperatur sei beispielsweise 40-130°C genannt. Die Umsetzung wird in Gegenwart von Wasser oder polaren organischen Lösungsmitteln, wie niederen Alkoholen oder Glykolen durchgeführt. Die Menge des Reaktionsmediums ist grundsätzlich nicht kritisch; sie soll eine gute rührfähige Lösung oder Suspension gewährleisten und beträgt im allgemeinen 50-500 Gew.-%, bevorzugt 50-200 Gew.-%, bezogen auf das Gesamtgewicht von A, B und C. Bei dieser Umsetzung werden in einer dem Fachmann geläufigen Weise N-Atome durch das Alkylierungsmittel C alkyliert und/oder quaterniert, so daß das Polykondensat kationische Gruppen enthält. Die so erhaltenen Polykondensate werden, in Form einer viskosen Schmelze oder vorzugsweise gelöst in Wasser oder niederen Alkoholen, bei pH-Werten von 8-11 und bei Temperaturen von 40-110°C mit Formaldehyd oder Formaldehyd freisetzenden Verbindungen umgesetzt. Pro Harnstoffgruppe werden hierbei 0,5 bis 1,2 Mol Formaldehyd, vorzugsweise 0,8-1,0 Mol Formaldehyd, verwendet.

Man kann die erfindungsgemäß zu verwendenden N-Methylol-Derivate der Polykondensate in einem Vorbehandlungsprozeß auf das zu färbende Fasermaterial aufbringen, oder auch in einem Nachbehandlungsprozeß auf fertige Färbungen und Drucke aufbringen.

Im Falle einer Vorbehandlung wird das mit den Polykondensaten behandelte Fasermaterial anschließend aus kurzer oder langer Flotte in der für die jeweiligen Farbstoffe üblichen Weise gefärbt. Die Vorbehandlung erfolgt durch Imprägnieren oder Bedrucken mit wäßrigen Klotzflotten bzw. Druckpasten, die neben den Polykondensaten in Mengen von 20 bis 150 g, vorzugsweise 40 bis 100 g, pro Liter Klotzflotte bzw. Druckpaste die zur chemischen Umsetzung der N-Methylolgruppen der Polykondensate mit den Hydroxylgruppen des Fasermaterials notwendigen sauer reagierenden Verbindungen enthalten.

Als geeignete sauer reagierende Verbindungen sind anorganische und organische Säuren und latent saure Verbindungen, die ihre Acidität erst bei höherer Temperatur entfalten, zu nennen, die den wäßrigen Flotten in Mengen von 2 bis 40 g, vorzugsweise 5 bis 20 g pro Liter zugesetzt werden. Geeignete Verbindungen sind: Salzsäure, Schwefelsäure, Phosphorsäure, Oxalsäure, Citronensäure, Trichloressigsäure, sauer reagierende Salze mehrwertiger Metalle, wie z.B. die Nitrate, Sulfate, Chloride oder Hydrogenphosphate von Aluminium, Magnesium und Zink, Ammoniumsalze, wie z.B. Ammoniumnitrat, Ammoniumoxalat, Monoammonium-und Diammoniumphosphat oder Gemische dieser Verbindungen. Neben den genannten Bestandteilen können die wäßrigen Flotten noch weitere übliche Hilfsmittel, wie Klotzhilfsmittel oder Netzmittel enthalten.

Die Imprägnierung der Gewebe mit den wäßrigen Flotten kann durch Foulardieren, Aufpflatschen, Besprühen oder andere übliche Auftragsverfahren erfolgen. Das so imprägnierte Fasermaterial wird auf eine Flottenaufnahme von 60 bis 100 %, vorzugsweise 70 bis 90 %, des Fasergewichts abgepreßt und mit oder ohne Zwischentrocknung einer Hitzebehandlung unterzogen; dies kann durch kurzfristige Trockenhitzebehandlung, z.B. 2 bis 10 Minuten bei 120 bis 150°C erfolgen. Bei dieser Hitzebehandlung erfolgt eine Fixierung der erfindungsgemäßen Mittel auf dem Gewebe.

Bei der Nachbehandlung werden die in üblicher Weise mit Reaktiv- oder Direktfarbstoffen gefärbten Fasermaterialien aus Cellulose oder Cellulose-Mischgeweben mit wäßrigen Flotten imprägniert, die die erfindungsgemäßen Mittel in Mengen von 20 bis 150 g, vorzugsweise 40 bis 60 g, pro Liter neben den sauer reagierenden, die Reaktion der N-Methylolgruppen mit den Hydroxylgruppen des Fasermaterials katalysierenden Verbindungen enthalten. Gegebenenfalls können noch in der Färberei übliche Hilfsmittel, wie Klotzhilfsmittel, Netzmittel, usw. mitverwendet werden. Auch hier erfolgt die anschließende Fixierung durch eine Hitzebehandlung, vorzugsweise eine kurzfristige Trockenhitzebehandlung.

Die Verwendung der erfindungsgemäßen Mittel erfolgt auf Textilmaterial aus natürlicher Cellulose, wie Baumwolle oder Leinen, oder regenerierte Cellulose wie Zellwolle, Rayon oder Modalfasern; diese Fasermaterialien können sowohl allein als auch in Mischungen mit synthetischen Fasermaterialien, z.B. solchen aus Polyester, Polyamid oder Polyacrylnitril vorliegen.

Die erfindungsgemäßen Mittel können zur Vor- oder Nachbehandlung von Färbungen und Drucken mit solchen Farbstoffen dienen, wie sie z.B. im Colour Index, 3. Auflage (1971), Bd. 2 auf den Seiten 2005 bis 2478 als Direktfarbstoffe und in Bd. 1 auf den Seiten 1001 bis 1562 als saure Farbstoffe aufgeführt sind. Ebenso können Färbungen und Drucke nachbehandelt werden, die mit faserreaktiven Farbstoffen ausgeführt wurden, um das durch unerwünschte Reaktion des faserreaktiven Farbstoffs mit Wasser entstandene Farbstoffhydrolysat auf der Faser zu binden.

Derartige faserreaktive Farbstoffe mit zur Reaktion mit Baumwolle und Regeneratcellulose befähigten Gruppen sind in großer Zahl bekannt. Als faserreaktive Gruppen kommen beispielsweise die folgenden Gruppen in Betracht:

Halogentriazin-, Halogenpyrimidin-, Halogenchinoxalin-carbonyl-, Halogenphthalazin-carbonyl-, Vinylsulfon-, β-Oxyethylsulfonester-, Methylsulfonyltriazin-, Methylsulfonyl-pyrimidin-, Methylsulfonyl-benzthiazol-, Fluorbenzthiazol-, β-Oxyethylsulfonamidester-, Aminoalkyl-sulfonylethylester-, α-Bromacryloyl-, β-Chlorpropionyl-, β-Chloracetyl-, β-Phenylsulfonylpropionyl-, Halogenpyridazonalkyl-, 2-Chlor-benzthiazolsulfonyl-, Alkylsulfonylpyrimidin-Gruppen.

Diese Farbstoffe werden beispielsweise von E. Siegel in "Chimia" (Supplementum 1968) Seiten 100-114 und K. Venkataraman in "The Chemistry of Synthetic Dyes (1972) Vol. VI beschrieben. Entsprechende Farbstoffe sind in Colour Index, 3. Auflage (1971), Bd. 3 auf den Seiten 3391 bis 3560 aufgeführt.

Mit Hilfe der erfindungsgemäßen Mittel erzielt man eine überraschend große Verbesserung der Farbechtheiten, insbesondere der Wasser-, Schweiß- und Waschechtheiten, gegenüber den Farbechtheiten üblicher Färbungen und Drucke mit anionischen Farbstoffen, insbesondere auch bei höheren Waschtemperaturen, z.B. bei 60°C, teilweise sogar bei 95°C.

Bei Fasermaterialien, die mit den erfindungsgemäßen Polykondensaten vorbehandelt wurden, wird bei der anschließenden Färbung eine deutlich erhöhte Farbausbeute erreicht, was eine erhebliche Einsparung an einzusetzendem Farbstoff bedeutet.

Üblicherweise werden bei Färbungen und Drucken mit anionischen Farbstoffen den Färbeflotten Elektrolytsalze, wie z.B. Natriumchlorid oder Natriumsulfat, zugesetzt, um eine befriedigende Absorption der Farbstoffe auf dem Textilmaterial zu erreichen.

Bei Färbungen und Drucken mit faserreaktiven Farbstoffen werden zusätzlich noch Alkalien mitverwendet, um die Fixierung der Farbstoffe auf dem Textilmaterial zu gewährleisten.

Die nach Beendigung der Färbevorgänge anfallenden großen Mengen dieser Hilfschemikalien stellen eine erhebliche ökologische Belastung dar. Fasermaterialien, die mit den erfindungsgemäßen Polykondensaten vorbehandelt wurden, lassen sich mit erheblich geringeren Mengen an Elektrolytsalzen oder in vielen Fällen sogar ganz ohne Elektrolytsalze färben. Bei Färbungen mit faserreaktiven Farbstoffen kann die Menge an Alkalien deutlich reduziert werden oder man kann vollständig auf Alkalien verzichten.

Ein weiterer Vorteil der erfindungsgemäßen Mittel besteht darin, daß die mit ihnen nachbehandelten Färbungen in ihren Farbechtheiten bedeutend verbesserte Waschechtheiten auch bei erhöhten Waschtemperaturen, z.B. bei 60°C, teilweise sogar bei 95°C, ergeben. Ein weiterer Vorteil der Verbindungen der Formel (I) besteht darin, daß sie zusammen mit den üblichen zur Hochveredlung von Cellulose verwendeten N-Methylolverbindungen in einem Bade eingesetzt werden können. In diesem Falle verwendet man zur Nachbehandlung fertiger Färbungen und Drucke Klotzflotten, die neben den Verbindungen der Formel (I) in Mengen von 20 bis 150 g, vorzugsweise 40 bis 60 g je Liter Klotzflotte, übliche zur Hochveredlung von Cellulose verwendete N-Methylolverbindungen in Mengen von 40 - 150 g je Liter Klotzflotte sowie die zur Kondensation notwendigen sauer reagierenden Verbindungen enthalten. Die anschließende Fixierung erfolgt nach den Verfahren der Hochveredlung, insbesondere durch eine kurzzeitige Trockenhitzebehandlung.

Übliche zur Hochveredlung von Baumwolle verwendete N-Methylolverbindungen sind gegebenenfalls veretherte acyclische sowie cyclische N-Methylolverbindungen, wie beispielsweise N,N'-Dimethylol-harnstoff, N,N'-Dimethylol-ethylenharnstoff oder -propylenharnstoff, N,N'-Dimethylol-dihydroxyethylenharnstoff, N,N'-Dimethylol-alkylcarbamate oder methylolierte Melamine. Geeignete Verbindungen sind beispielsweise in K. Lindner "Tenside-Textilhilfsmittel-Waschrohstoffe" Bd. III (1971) S. 2618-2625, und M. Chwala/V.Anger "Handbuch der Textilchemie" (1977) S. 446-462 beschrieben.

Bei bisher angewandten Nachbehandlungsmitteln zur Echtheitsverbesserung wird meist eine Verhärtung des nachbehandelten Fasermaterials beobachtet, die unter anderem zu einem härteren Griff des Materials und zu einer schlechteren Vernähbarkeit führt. Im Gegensatz dazu werden durch die Nachbehandlung mit den erfindungsgemäßen Verbindungen Griff und Vernähbarkeit des nachbehandelten Materials weitaus weniger beeinträchtigt.

### Beispiel 1

343,5 Teile N,N-Bis-(3-ureidopropyl)-methylamin wurden in 280 Teilen Wasser gelöst und mit 78 Teilen N,N,N',N'-Tetramethylpropylendiamin vermischt. Bei 50 bis 60°C wurden innerhalb einer Stunde 211 Teile 1-Brom-3-chlorpropan eindosiert. Anschließend rührte man 3 Stunden bei 70 bis 80°C und 5 Stunden bei 80 bis 90°C. Die titrimetrische Bestimmung von Bromid bzw. Chlorid ergab 11,7 % Bromid und 5,1 % Chlorid. Die Lösung des Kondensationsproduktes wurde mit 347,6 Teilen Wasser verdünnt und mit wenig 10 %iger Natronlauge auf einen pH-Wert von 9,0 bis 9,5 eingestellt. Dann dosierte man bei 45 bis 50°C in 1 Stunde 218,6 Teile einer 37 %igen wäßrigen Formaldehyd-Lösung ein und rührte noch 4 Stunden bei 45 bis 50°C. Während des Rührens wurde der pH-Wert durch gelegentlichen Zusatz von 10 %iger Natronlauge bei 9,0 bis 9,5 gehalten. Man stellte mit ca. 5 Teilen Eisessig auf einen pH-Wert von 8,7 bis 9,0 ein und verdünnte mit 875,2 Teilen Wasser auf einen Feststoffgehalt von 30 %. Man erhielt 2 403 Teile der wäßrigen Lösung des Kondensationsproduktes.

### Beispiel 2

115,5 g Teile N,N-Bis-(3-ureidopropyl)-methylamin und 22,4 Teile 1,4-Diazabicyclo[2.2.2]octan wurden in 92 Teilen Wasser gelöst. Bei 50 bis 60°C wurden in einer Stunde 75,1 Teile 1-Brom-3-chlorpropan eindosiert. Man rührte anschließend 3 Stunden bei 70 bis 80°C und 5 Stunden bei 80 bis 90°C. Die Titration auf Basenstickstoff mit Perchlorsäure in Eisessig ergab einen Restgehalt an Basenstickstoff von 0,26 %.

Man verdünnte mit 117 Teilen Wasser, stellte mit 10 %iger Natronlauge einen pH-Wert von 9,0 bis 9,5 ein und dosierte bei 45 bis 50°C 73 Teile einer 37 %igen wäßrigen Formalin-Lösung ein. Man rührte 4 Stunden bei 45 bis 50°C, wobei der pH-Wert durch Zusatz von Natronlauge konstant gehalten wurde. Nach Einstellung des pH-Wertes auf 8,7 bis 9,0 mit Eisessig wurde mit 305 Teilen Wasser auf einen Feststoffgehalt von 30 % eingestellt. Man erhielt 813 Teile der wäßrigen Lösung des Kondensationsproduktes.

### Beispiel 3

Analog zu Beispiel 2 wurden 58 Teile N,N-Bis-(3-ureidopropyl)methylamin, 13,4 Teile N,N,N',N'-Tetramethylpropylendiamin und 34,8 Teile 1,6-Dichlorhexan in 47 Teilen Wasser polykondensiert, bis der Gehalt an Basenstickstoff auf 0,5 % gefallen war. Nach Verdünnung mit 100 Teilen Wasser wurde mit 45 Teilen 30 %iger wäßriger Formaldehyd-Lösung umgesetzt. Man erhielt 298 Teile der Lösung des Polykondensats mit einem Feststoffgehalt von 40,8 %.

### Beispiel 4

Analog zu Beispiel 2 wurden 116 Teile Bis-(3-ureidopropyl)-methylamin, 46 Teile N,N'-Bis-(3-dimethyl-aminopropyl)-harnstoff und 74,3 Teile 1-Brom-3-chlorpropan in 92,5 Teilen Wasser polykondensiert, bis der Gehalt an Basenstickstoff auf 0,07 % gesunken war, und anschließend nach Verdünnung mit 142 Teilen Wasser mit 73 Teilen 37 %iger wäßriger Formaldehydlösung umgesetzt. Man erhielt 543 Teile einer wäßrigen Lösung des Polykondensats mit einem Feststoffgehalt von 45,5 %.

### Beispiel 5

Analog zu Beispiel 2 wurden 58 Teile N,N-Bis-(3-ureidopropyl)-methylamin, 13,4 Teile N,N,N',N'-Tetramethylpropylendiamin und 28,1 Teile 1,4-Dichlorbuten-2 in 70 Teilen Wasser polykondensiert, bis der Gehalt an Basenstickstoff auf 0,2 % gesunken war. Anschließend wurde mit 32,4 Teilen 37 %iger wäßriger Formaldehydlösung umgesetzt. Man erhielt 201 Teile einer wäßrigen Lösung des Kondensationsproduktes mit einem Feststoffgehalt von 54,4 %.

### Beispiel 6

29,0 Teile N-(3-Dimethylaminopropyl)-harnstoff und 10,2 Teile 3-Dimethylaminopropylamin wurden in 39,2 Teilen Wasser gelöst und bei 30 bis 40°C unter Kühlung mit 27,8 Teilen Epichlorhydrin zur Umsetzung gebracht. Man rührte 1 Stunde bei 35 bis 40°C und 2 Stunden bei 55 bis 60°C, bis die titrimetrische Bestimmung von Chlorid einen Wert von mindestens 10,0 % ergab. Anschließend wurde die wäßrige Lösung des Kondensats mit 28 Teilen Wasser verdünnt, mit 1,2 Teilen 25 %iger wäßriger Salzsäure auf einen pH-Wert von 9 bis 9,5 gestellt und bei 40 bis 45°C mit 15,4 Teilen 37 %iger wäßriger Formaldehydlösung versetzt. Man rührte 3 Stunden bei 40 bis 45°C und stellte dann mit Eisessig einen pH-Wert von 8 bis 8,5 ein. Man erhielt 152 Teile der wäßrigen Lösung des Polykondensates mit einem Feststoffgehalt von 48 %.

### Beispiel 7

76 Teile N,N-Dimethyl-1,3-diaminopropan, 27 Teile Harnstoff und 11,5 Teile Wasser wurden bei 105 bis 110°C 10 Stunden gerührt, bis die Ammoniakentwicklung fast vollständig beendet war. Das farblose, viskose Reaktionsgemisch wurde in 83 Teilen Wasser gelöst und bei 35 bis 40°C in 45 Minuten unter Kühlung mit 72,2 Teilen Epichlorhydrin umgesetzt. Man rührte 1 Stunde bei 35 bis 40°C, 3 Stunden bei 60 bis 65°C und 4 Stunden bei 70 bis 75°C, bis die titrimetrische Bestimmung von Chlorid einen Wert von 10,5 % ergab. Man verdünnte mit 73 Teilen Wasser, setzte bei 40 bis 45°C 35 Teile einer 37 %igen wäßrigen Formaldehyd-Lösung zu und rührte bei gleicher Temperatur 4 Stunden. Nach Einstellung auf einen pH-Wert von 8 bis 8,5 mit Eisessig erhielt man 369 Teile der wäßrigen Lösung des Kondensats mit einem Feststoffgehalt von 49 %.

### Beispiel 8

In analoger Weise zu Beispiel 7 wurden 76,6 Teile N,N-Dimethyl-1,3-dimanino-propan, 22,5 Teile Harnstoff, 97 Teile Epichlorhydrin und 28,9 Teile 37 %ige wäßrige Formaldehydlösung zu einem Polykondensat umgesetzt, dessen wäßrige Lösung einen Feststoffgehalt von 47 % aufwies.

### Anwendungsbeispiel 1

Ein Baumwollgewebe wurde auf einer Haspelkufe in einem Flottenverhältnis von 1:20 bei 40°C mit einer Färbeflotte behandelt, die im Liter ein Farbstoffgemisch von 0,44 g Direct yellow 58 + 0,35 g Direct black 112 + 0,3 g Direct red 83:1 enthielt.

Man erhitzte das Färbebad innerhalb von 30 Minuten auf 98°C und gab dann 20 g/l Natriumsulfat kalziniert zu. Nach einer Stunde Färbezeit bei gleicher Temperatur wurde die Färbeflotte mit 1°C/Minute auf 80°C abgekühlt und bei dieser Temperatur 15 Minuten gehalten. Anschließend wurde die Färbung mit kaltem Wasser gespült und dann bei 80°C im Umluft-Trockenschrank getrocknet.

Diese Färbung wurde dann auf einem Foulard mit einer Flotte, die im Liter 32 g des in Beispiel 6 beschriebenen Kondensationsproduktes sowie 10 g MgCl₂ enthielt, bei Raumtemperatur und einer Flottenaufnahme von 100 % foulardiert.

Anschließend wurde die Färbung bei 80°C im Umluft-Trockenschrank getrocknet und dann auf einem Spannrahmen 1 Minute bei 180°C fixiert.
Die Echtheitsprüfung des nachbehandelten Gewebes im Vergleich zu einer nicht nachbehandelten Färbung ergab folgende Echtheitsbewertung.

| | ohne Nachbehandlung | mit Nachbehandlung |
|---|---|---|
| Wasserechtheit | 1,3 | 4,7 |
| DIN 54 006 | | |
| ISO 105-E01 | | |
| Anbluten auf Baumwolle | 1,4 | 3,9 |
| ISO C2-Wäsche | | |
| DIN 54 017 | | |
| ISO 105-C06 | | |

### Anwendungsbeispiel 2

Ein Baumwollgewebe wurde auf einer Haspelkufe, wie in Beispiel 1 beschrieben, mit einer Färbeflotte, die im Liter ein Farbstoffgemisch von 0,44 g Direct blue 85 + 0,33 g Direct red 89 + 0,15 g Direct orange 46 enthielt, gefärbt und getrocknet.

Diese Färbung wurde dann auf einem Foulard, wie in Anwendungsbeispiel 1 beschrieben, mit einer Flotte, die im Liter 62,5 g des in Beispiel 6 beschriebenen Kondensationsproduktes sowie 10 g MgCl₂ enthielt, getrocknet und fixiert.

| Echtheitsprüfung | ohne Nachbehandlung | mit Nachbehandlung |
|---|---|---|
| Wasserechtheit | 1,1 | 4,7 |
| DIN 54 006 | | |
| ISO 105-E01 | | |
| Anbluten auf Baumwolle | 1,3 | 4,2 |
| ISO C2-Wäsche | | |
| DIN 54 017 | | |
| ISO 105-C06 | | |

### Anwendungsbeispiele 3 - 10

Baumwollproben, die nach Angaben des Beispieles 1 gefärbt und getrocknet wurden, wurden mit in Tabelle 1 genannten Mengen des in Beispiel 6 beschriebenen Kondensationsproduktes (1) und MgCl₂ (2) gemäß Beispiel 1 nachbehandelt, getrocknet und fixiert.

**Tabelle 1**

| Beispiel Nr. | Färbung mit | Menge (1) g/l | Menge (2) g/l | Waschechtheit DIN 54 017 |
|---|---|---|---|---|
| 3 | 2,00 % Direct yellow 58 | 32 | 10 | 3,8 |
| | " " " | - | - | 1,2 |
| 4 | 1,95 % Direct red 212 | 62,5 | 10 | 4,2 |
| | " " " | - | - | 0,9 |
| 5 | 2,70 % Direct blue 229 | 62,5 | 10 | 2,8 |
| | " " " | - | - | 1,0 |
| 6 | 1,50 % Direct yellow 86 | 62,5 | 10 | 3,9 |
| | " " " | - | - | 1,1 |
| 7 | 1,80 % Direct blue 85 | 32 | 10 | 4,4 |
| | " " " | - | - | 1,3 |
| 8 | 1,20 % Direct red 89 | 32 | 10 | 3,8 |
| | " " " | - | - | 1,2 |
| 9 | 1,20 % Direct red 83:1 | 32 | 10 | 3,9 |
| | " " " | - | - | 1,3 |
| 10 | 3,50 % Direct violett 95 | 47 | 10 | 4,0 |
| | " " " | - | - | 1,1 |

### Anwendungsbeispiel 11

Ein Baumwollgewebe wurde auf einer Haspelkufe in einem Flottenverhältnis von 1:20 bei 40°C mit einer Färbeflotte behandelt, die im Liter 0,75 g des Farbstoffs Direct violett 47 enthielt. Man erhitzte das Färbebad innerhalb von 30 Minuten auf 98°C und gab dann 20 g/l Natriumsulfat kalziniert zu. Nach einer Stunde Färbezeit bei gleicher Temperatur wurde die Färbeflotte mit 1°C/Minute auf 80°C abgekühlt und bei dieser Temperatur 15 Minuten gehalten. Anschließend wurde die Färbung mit kaltem Wasser gespült und dann bei 80°C im Umluft-Trockenschrank getrocknet.

Diese Färbung wurde dann auf einem Foulard mit einer Flotte, die im Liter 50 g des in Beispiel 1 beschriebenen Kondensationsproduktes sowie 10 g MgCl₂ enthielt, bei Raumtemperatur und einer Flottenaufnahme von 100 % foulardiert.

Anschließend wurde die Färbung bei 80°C im Umluft-Trockenschrank getrocknet und dann auf einem Spannrahmen 1 Minute bei 180°C fixiert.

| Echtheitsprüfung | ohne Nachbehandlung | mit Nachbehandlung |
|---|---|---|
| Waschechtheit | 0,9 | 4,9 |
| ISO-C2-Wäsche | | |
| DIN 54 017 | | |
| ISO 105-C06 | | |

### Anwendungsbeispiele 12 - 19

Baumwollfärbungen, die nach Angaben des Beispieles 1 gefärbt und getrocknet wurden, wurden mit in Tabelle 2 genannten Mengen des in Beispiel 1 beschriebenen Kondensationsproduktes (1) und MgCl₂ (2) gemäß Beispiel 1 nachbehandelt, getrocknet und fixiert.

**Tabelle 2**

| Beispiel Nr. | Färbung mit | Menge (1) g/l | Menge (2) g/l | Waschechtheit DIN 54 017 |
|---|---|---|---|---|
| 12 | 2,00 % Direct yellow 58 | 50 | 10 | 3,5 |
| | " " " | - | - | 1,2 |
| 13 | 1,95 % Direct red 212 | 100 | 10 | 4,0 |
| | " " " | - | - | 0,9 |
| 14 | 2,70 % Direct blue 229 | 100 | 10 | 3,0 |
| | " " " | - | - | 1,0 |
| 15 | 1,50 % Direct yellow 86 | 100 | 10 | 3,2 |
| | " " " | - | - | 1,1 |
| 16 | 1,80 % Direct blue 85 | 50 | 10 | 3,8 |
| | " " " | - | - | 1,3 |
| 17 | 1,20 % Direct red 89 | 50 | 10 | 4,5 |
| | " " " | - | - | 1,2 |
| 18 | 1,20 % Direct red 83:1 | 50 | 10 | 3,5 |
| | " " " | - | - | 1,3 |
| 19 | 3,50 % Direct violett 95 | 75 | 10 | 4,2 |
| | " " " | - | - | 1,1 |

### Anwendungsbeispiel 20

Ein Baumwollgewebe wurde auf einer Haspelkufe in einem Flottenverhältnis von 1:20 bei 40°C mit einer Färbeflotte behandelt, die im Liter 0,75 g des Farbstoffs Direct violett 47 enthielt. Man erhitzte das Färbebad innerhalb von 30 Minuten auf 98°C und gab dann 20 g/l Natriumsulfat kalziniert zu. Nach einer Stunde Färbezeit bei gleicher Temperatur wurde die Färbeflotte mit 1°C/Minute auf 80°C abgekühlt und bei dieser Temperatur 15 Minuten gehalten. Anschließend wurde die Färbung mit kaltem Wasser gespült und dann bei 80°C im Umluft-Trockenschrank getrocknet.

Diese Färbung wurde dann auf einem Foulard mit einer Flotte, die im Liter 50 g des in Beispiel 8 beschriebenen Kondensationsproduktes sowie 10 g MgCl₂ enthielt, bei Raumtemperatur und einer Flottenaufnahme von 100 % foulardiert.

Anschließend wurde die Färbung bei 80°C im Umluft-Trockenschrank getrocknet und dann auf einem Spannrahmen 1 Minute bei 180°C fixiert.

| Echtheitsprüfung | ohne Nachbehandlung | mit Nachbehandlung |
|---|---|---|
| Waschechtheit | 0,9 | 4,8 |
| ISO-C2-Wäsche | | |
| DIN 54 017 | | |
| ISO 105-C06 | | |

Außerdem wurde die Lichtechtheit durch die Nachbehandlung nicht negativ beeinflußt.

### Anwendungsbeispiel 21

Ein Baumwollgewebe wurde auf einer Haspelkufe in einem Flottenverhältnis von 1:20 bei 50°C mit einer Färbeflotte behandelt, die im Liter 2 g Reactive red 123 sowie 0,5 g NaHCO₃ enthielt. Nach 10 Minuten bei dieser Temperatur gab man 50 g/l Na₂SO₄ kalziniert zu. Nach weiteren 30 Minuten wurden 4 g/l Na₂CO₃ und nach weiteren 30 Minuten 1,5 ml/l Natronlauge 38° Bé zugegeben.

Nach einer Verweilzeit von 60 Minuten nach der Natronlauge-Zugabe bei konstant 50°C wurde die Färbung bei einem Flottenverhältnis von 1:20 folgendermaßen gespült:
1. 1 x 10 Minuten bei 50°C,
2. 4 x 10 Minuten bei Raumtemperatur.

Das nach 1. und 2. ungenügend gespülte Material, das noch erhebliche Anteile an nicht-fixiertem und/oder hydrolysiertem Reaktivfarbstoff enthielt, wurde mittels Foulard zu 100 % Flottenaufnahme abgequetscht und im Umluft-Trockenschrank bei 80°C getrocknet. Diese Färbung wurde dann auf einem Foulard mit einer Flotte, die im Liter 19 g des in Beispiel 2 beschriebenen Kondensationsproduktes sowie 10 g MgCl₂ enthielt, bei Raumtemperatur und einer Flottenaufnahme von 100 % foulardiert.

Anschließend wurde die Färbung bei 80°C im Umluft-Trockenschrank getrocknet und dann auf einem Spannrahmen 1 Minute bei 180°C fixiert.

| Echtheitsprüfung | ohne Nachbehandlung | mit Nachbehandlung |
|---|---|---|
| Waschechtheit | 1,4 | 3,9 |
| ISO-C2-Wäsche | | |
| DIN 54 017 | | |
| ISO 105-C06 | | |

### Anwendungsbeispiel 22

Ein Baumwollgewebe wurde auf einer Haspelkufe in einem Flottenverhältnis von 1:20 bei 40°C mit einer Färbeflotte behandelt, die im Liter ein Farbstoffgemisch von 0,175 g Direct yellow 58 + 0,08 g Direct red 83:1 + 0,175 g Direct black 112 enthielt.

Man erhitzte das Färbebad innerhalb von 30 Minuten auf 98°C und gab dann 20g/l Natriumsulfat kalziniert zu. Nach einer Stunde Färbezeit bei gleicher Temperatur wurde die Färbeflotte mit 1°C/Minute auf 80°C abgekühlt und bei dieser Temperatur 15 Minuten gehalten. Anschließend wurde die Färbung mit kaltem Wasser gespült und dann bei 80°C im Umluft-Trockenschrank getrocknet.

Diese Färbung wurde dann auf einem Foulard mit einer Flotte, die im Liter 16 g des in Beispiel 8 beschriebenen Kondensationsproduktes sowie 10 g MgCl₂ enthielt, bei Raumtemperatur und einer Flottenaufnahme von 65 % foulardiert.
Anschließend wurde die Färbung bei 80°C im Umluft-Trockenschrank getrocknet und dann auf einem Spannrahmen 1 Minute bei 180°C fixiert.

| Echtheitsprüfung | ohne Nachbehandlung | mit Nachbehandlung |
|---|---|---|
| Waschechtheit | 0,9 | 4,3 |
| ISO-C2-Wäsche | | |
| DIN 54 017 | | |
| ISO 105-C06 | | |
| Lichtechtheit | 5-6 | 5-6 |
| DIN 54 004 | | |

### Anwendungsbeispiel 23

Ein Baumwollgewebe wurde auf einer Haspelkufe in einem Flottenverhältnis von 1:20 bei 40°C mit einer Färbeflotte behandelt, die im Liter ein Farbstoffgemisch von 0,075 g Direct orange 46 + 0,65 g Direct red 89 + 0,275 g Direct blue 85 enthielt.

Man erhitzte das Färbebad innerhalb von 30 Minuten auf 98°C und gab dann 20g/l Natriumsulfat kalziniert zu. Nach einer Stunde Färbezeit bei gleicher Temperatur wurde die Färbeflotte mit 1°C/Minute auf 80°C abgekühlt und bei dieser Temperatur 15 Minuten gehalten. Anschließend wurde die Färbung mit kaltem Wasser gespült und dann bei 80°C im Umluft-Trockenschrank getrocknet.

Diese Färbung wurde dann auf einem Foulard mit einer Flotte, die im Liter 32 g des in Beispiel 8 beschriebenen Kondensationsproduktes sowie 10 g MgCl₂ enthielt, bei Raumtemperatur und einer Flottenaufnahme von 65 % foulardiert.
Anschließend wurde die Färbung bei 80°C im Umluft-Trockenschrank getrocknet und dann auf einem Spannrahmen 1 Minute bei 180°C fixiert.

| Echtheitsprüfung | ohne Nachbehandlung | mit Nachbehandlung |
|---|---|---|
| Waschechtheit | 0,9 | 4,4 |
| ISO-C2-Wäsche | | |
| DIN 54 017 | | |
| ISO 105-C06 | | |
| Lichtechtheit | 3-4 | 5 |
| DIN 54 004 | | |

Die Bewertungsziffern wurden einer Skala von 1 (schlechteste Note) bis 5 (beste Note) bezüglich der Waschfestigkeit und einer Skala von 1 (schlechteste Note) bis 8 (beste Note) bezüglich der Lichtechtheit entnommen.

### Anwendungsbeispiel 24

Es wurde eine Färbung auf einem Baumwoll-Polyester-Mischgewebe 45/55 erstellt mit
0,099 % eines gelben Dispersionsfarbstoffs
(Forongelb RD 4GRL® , Sandoz AG),
0,1 % eines roten Dispersionsfarbstoffs
(Foronrot RD® , Sandoz AG) und
0,13 % eines blauen Dispersionsfarbstoffs
(Foronblau RD GLF® , Sandoz AG) für den Polyesteranteil und mit
0,38 % eines gelben Direktfarbstoffs
(Indosolgelb SF2RL® , Sandoz AG)
0,043 % eines roten Direktfarbstoffs
(Indosolrubinol SF RGRN® , Sandoz AG) und
0,069 % eines blauen Direktfarbstoffs
(Indosolmarineblau SF BL 250 %® , Sandoz AG) für den Baumwollanteil.

Die Färbung wurde auf einem Rollenbad im Flottenverhältnis von 1:10 mit einer Färbeflotte durchgeführt, die neben den vorgenannten Farbstoffen 1 g eines handelsüblichen Dispergiermittels und 1 g eines handelsüblichen weichmachenden Mittels sowie 10 g Natriumsulfat im Liter enthielt.

Man erhitzte das Färbebad mit 2°C/Minute auf 130°C und hielt bei dieser Temperatur 30 Minuten. Danach wurde die Flotte mit 1°C bis 2°C/Minute auf 80°C abgekühlt und 20 Minuten bei dieser Temperatur gehalten.
Anschließend wurde diese Färbung mit kaltem Wasser klar gespült und dann im Umluft-Trockenschrank getrocknet.

Die Färbung wurde dann auf einem Foulard mit einer Flotte, die im Liter 20 g des in Beispiel 8 beschriebenen Kondensationsproduktes sowie 10 g MgCl₂ enthielt, bei Raumtemperatur und einer Flottenaufnahme von 60 % foulardiert.
Anschließend wurde die Färbung bei 80°C im Umluft-Trockenschrank getrocknet und dann auf einem Spannrahmen 1 Minute bei 180°C fixiert.

Die Echtheitsprüfungen der derart nachbehandelten Färbung sind in der nachstehenden Tabelle aufgeführt.

| | Echtheiten (Anbluten auf Baumwolle) | |
|---|---|---|
| | ohne Nachbehandlung | mit Nachbehandlung |
| Wasserechtheit | 2 | 4-5 |
| DIN 54 006 | | |
| Schweissechtheit alkalisch | 2-3 | 5 |
| DIN 54 020 | | |
| Waschechtheit 40°C | 3 | 4-5 |
| DIN 54 014 | | |
| Waschechtheit 60°C | 1-2 | 4-5 |
| DIN 54 014 | | |
| Lichtechtheit | PES: 4-5 | PES: 4-5 |
| DIN 54 004 | CO: 3-4 | CO: 3-4 |

### Anwendungsbeispiel 25

Ein Baumwollgewebe wurde auf einer Haspelkufe in einem Flottenverhältnis von 1:20 bei 40°C mit einer Färbeflotte behandelt, die im Liter ein Farbstoffgemisch von 0,075 g Direct orange 46 + 0,65 g Direct red 89 + 0,275 g Direct blue 85 enthielt.

Man erhitzte das Färbebad innerhalb von 30 Minuten auf 98°C und gab dann 20 g/l Natriumsulfat kalziniert zu. Nach 1 Stunde Färbezeit bei gleicher Temperatur wurde die Färbeflotte mit 1°C/Minute auf 80°C abgekühlt und bei dieser Temperatur 15 Minuten gehalten.

Anschließend wurde diese Färbung mit kaltem Wasser gespült und dann bei 80°C im Umluft-Trockenschrank getrocknet.

Diese Färbung wurde dann auf einem Foulard mit einer Flotte, die im Liter 64 g des in Beispiel 8 beschriebenen Kondensationsproduktes sowie 10 g MgCl₂, 60 g einer 40 %igen wäßrigen Lösung von Dimethylol-dihydroxy-ethylenharnstoff und 30 g eines handelsüblichen Weichmachers enthielt, bei Raumtemperatur und einer Flottenaufnahme von 65 % foulardiert.
Anschließend wurde die Färbung bei 80°C im Umluft-Trockenschrank getrocknet und dann auf einem Spannrahmen 1 Minute bei 180°C fixiert.

| Echtheitsprüfung | ohne Nachbehandlung | mit Nachbehandlung |
|---|---|---|
| Waschechtheit | 0,9 | 4,3 |
| ISO-C2-Wäsche | | |
| DIN 54 017 | | |
| ISO 105-C06 | | |
| Lichtechtheit | 3-4 | 5 |
| DIN 54 004 | | |

### Anwendungsbeispiel 26

Ein Baumwollgewebe wurde auf einem Foulard bei Raumtemperatur und einer Flottenaufnahme von 100 % mit einer Flotte behandelt, die im Liter 64 g des in Beispiel 8 beschriebenen Kondensationsproduktes sowie 10 g MgCl₂ enthielt.

Das Gewebe wurde anschließend bei 80°C im Umluft-Trockenschrank getrocknet und dann 1 Minute bei 180°C auf einem Spannrahmen fixiert.
Das so vorbehandelte Baumwollgewebe wurde dann in der Haspelkufe in einem Flottenverhältnis von 1:20 bei 50°C mit einer Färbeflotte behandelt, die im Liter ein Farbstoffgemisch von 0,5 g Reactive brown 19 + 0,5 g Reactive orange 64 + 0,5 g Reactive blue 75 sowie 0,5 g NaHCO₃ enthielt.

Nach 40 Minuten bei dieser Temperatur gab man 4 g/l Na₂CO₃ und nach weiteren 30 Minuten 1,5 ml/l Natronlauge 38° Bé zu. 60 Minuten nach der Natronlauge-Zugabe bei konstant 50°C wurde die Färbung bei einem Flottenverhältnis von 1:20 folgendermaßen gespült:
1 x 10 Minuten bei Raumtemperatur,
1 x 20 Minuten bei 98°C,
1 x 10 Minuten bei Raumtemperatur.

Diese Färbung wurde anschließend im Umluft-Trockenschrank bei 80°C getrocknet.

Ein Vorteil dieser Methode besteht darin, daß man im Vergleich zur Färbung eines nicht vorbehandelten Baumwollgewebes mit der gleichen Farbstoffmenge 50 g/l Na₂SO₄ einspart.

Desweiteren erhält man durch Überfärben des wie beschrieben vorbehandelten Baumwollgewebes eine im Vergleich zur herkömmlichen Methode um etwa 80 % tiefere Anfärbung.

Außerdem wird die Färbeflotte beim Überfärben des wie beschrieben vorbehandelten Baumwollgewebes annähernd vollständig ausgezogen und die Farbstoffe migrieren auch bei dem 98°C-Spülbad nicht wieder zurück in die Spülflotte.

### Vergleichsbeispiel 1:

Eine wie in Anwendungsbeispiel 1 ausgeführte Färbung mit 1,95 % Direct red 212 auf Baumwollgewebe wurde auf einem Foulard mit einer Flotte imprägniert, die im Liter 30 g des in Beispiel 8 beschriebenen Kondensationsproduktes sowie 10 g MgCl₂ enthielt, und auf eine Flottenaufnahme von 100 % abgequescht.
Anschließend wurde die Färbung bei 80°C im Umluft-Trockenschrank getrocknet und dann auf einem Spannrahmen bei 180° 1 min. fixiert.
Die Echtheitsbewertungen dieser Färbung A sind in Tabelle 3 aufgeführt.
Zum Vergleich wurde ein in gleicher Weise gefärbtes Material mit einer Flotte foulardiert, die anstelle des vorgenannten Kondensationsproduktes im Liter 50 g des schwefelsauren Salzes des Kondensationsproduktes aus Diethylentriamin und Dicyandiamid (Beispiel 4 der deutschen Patentschrift 855 001) als echtheitsverbesserndes Mittel enthielt. Die nach Trocknung und Fixierung erhaltenen Echtheitsbewertungen dieser Färbung B sind ebenfalls in Tabelle 3 aufgeführt.

### Vergleichsbeispiel 2

Eine wie in Anwendungsbeispiel 1 ausgeführte Färbung mit 1,5 % Direct black 22 auf Baumwollgewebe wurde, wie in Vergleichsbeispiel 1 beschrieben, mit einer Flotte imprägniert, die im Liter 30 g des in Beispiel 8 beschriebenen Kondensationsproduktes sowie 10 g MgCl₂ enthielt, und, wie oben beschrieben, weiter behandelt.

Die Ergebnisse der Echtheitsbewertung dieser Färbung C sind in Tabelle 3 aufgeführt.
Als Vergleich wurde, wie in Vergleichsbeispiel 1 beschrieben, ein in gleicher Weise gefärbtes Material mit einer Flotte nachbehandelt, die im Liter 50 g des schwefelsauren Salzes des in Vergleichsbeispiel 1 genannten Kondensationsproduktes enthielt Die Ergebnisse der Echtheitsbewertung dieser Färbung D sind in Tabelle 3 aufgeführt.

**Tabelle 3**

| | Färbung A | Färbung B | Färbung C | Färbung D |
|---|---|---|---|---|
| Wasserechtheit | 5,0 | 1,6 | 5,0 | 3,1 |
| DIN 54 006 | | | | |
| Schweissechtheit pH 8 | 4,9 | 1,6 | 4,9 | 2,6 |
| DIN 54 020 | | | | |
| Waschechtheit 40° | 4,8 | 2,8 | 4,8 | 4,3 |
| DIN 54 017 | | | | |
| ISO A2-Wäsche | | | | |
| Waschechtheit 60° | 4,3 | 2,1 | 4,4 | 2,4 |
| DIN 54 017 | | | | |
| ISO C2-Wäsche | | | | |

## Patentansprüche

1. N-Methylol-Derivate von Polykondensaten mit quaternären N-Atomen aus
A) basischen Harnstoffen der Formel
HN(R¹)-CO-N(R²)-X¹-N(R³, R⁴) (I),
in der
X¹ C₂-C₄-Alkylen bedeutet,
R¹ und R² unabhängig voneinander Wasserstoff oder C₁-C₄-Alkyl darstellen oder R¹ und R² gemeinsam Ethylen-1,2 oder Trimethylen bedeuten und
R³ und R⁴ unabhängig voneinander Wasserstoff, C₁-C₄-Alkyl oder C₂-C₄-Hydroxyalkyl darstellen, wobei weiterhin R³ den Rest -X¹-N(R²)-CO-NHR¹ bedeuten kann und wobei R³ und R⁴ gemeinsam einen der Reste -CH₂CH₂-O-CH₂CH₂- oder -CH₂CH₂-N(R⁵)-CH₂CH₂- bedeuten können, worin R⁵ Wasserstoff, C₁-C₄-Alkyl, C₂-C₄-Hydroxyalkyl, den Rest -X¹-N(R²)-CO-NHR¹ oder den Rest -CO-NH₂ bedeutet,
B) Polyaminen der Formel
(R⁶,R⁷)N-X²-N(R⁸,R⁹) (II),
in der
X² C₂-C₆-Alkylen bedeutet, das durch -O-, -NR¹⁰-, wobei R¹⁰ für Wasserstoff oder C₁-C₄-Alkyl steht, oder durch -NH-CO-NH- unterbrochen sein kann, und
R⁶, R⁷, R⁸ und R⁹ unabhängig voneinander Wasserstoff, C₁-C₄-Alkyl oder C₂-C₄-Aminoalkyl stehen und R⁶ und R⁷ gemeinsam und unabhängig hiervon R⁸ und R⁹ gemeinsam oder R⁶ und R⁸ gemeinsam und unabhängig hiervon R⁷ und R⁹ gemeinsam Ethylen-1,2 oder Trimethylen bedeuten können, und
C) bifunktionellen Alkylierungsmitteln.

2. N-Methylol-Derivate von Polykondensaten nach Anspruch 1, in denen als basische Harnstoffe solche der Formel
H₂N-CO-NH-X¹-N(R¹³,R¹⁴) (III)
eingesetzt werden, in der
X¹ C₂-C₄-Alkylen bedeutet und
R¹³ und R¹⁴ unabhängig voneinander C₁-C₃-Alkyl bedeuten und R¹³ weiterhin -X¹-NH-CO-NH₂
bedeuten kann.

3. N-Methylol-Derivate von Polykondensaten nach Anspruch 1, in denen als Polyamine solche der Formel
(R¹⁶,R¹⁷)N-X²-N(R¹⁸,R¹⁹) (IV)
eingesetzt werden, in der
X² C₂-C₆-Alkylen bedeutet, das durch -O-, -NR¹⁰-, wobei R¹⁰ für Wasserstoff oder C₁-C₄-Alkyl steht, oder durch -NH-CO-NH- unterbrochen sein kann, und
R¹⁶, R¹⁷, R¹⁸ und R¹⁹ unabhängig voneinander Wasserstoff oder C₁-C₃-Alkyl bedeuten.

4. Verfahren zur Herstellung der N-Methylol-Derivate von Polykondensaten gemäß Anspruch 1, dadurch gekennzeichnet, daß A) basische Harnstoffe, B) Polyamine und C) bifunktionelle Alkylierungsmittel im Molverhältnis A:B:C = 0,5-2,5:1:1,0-3,2 bei 40 bis 130°C in Gegenwart von Wasser oder polaren organischen Lösungsmitteln zur Reaktion gebracht werden und anschließend bei 40 bis 110°C und pH-Werten von 8 bis 11 mit Formaldehyd oder Formaldehyd freisetzenden Verbindungen umgesetzt werden, wobei pro Harnstoffgruppe -N(R²)-CO-NH(R¹) 0,5-1,2 Mol Formaldehyd verwendet werden.

5. Verwendung der Verbindungen nach Anspruch 1 zur Verbesserung der Naßechtheiten von Färbungen und Drucken mit Reaktiv- und Direktfarbstoffen auf Cellulose und Cellulose-Mischgeweben.

6. Verwendung nach Anspruch 5, dadurch gekennzeichnet, daß man die Verbindungen nach Anspruch 1 in einem Nachbehandlungsverfahren auf die gefärbten oder bedruckten Fasermaterialien aufbringt.

7. Verwendung nach Anspruch 5, dadurch gekennzeichnet, daß man die Verbindungen nach Anspruch 1 in einem Vorbehandlungsverfahren auf das ungefärbte Fasermaterial aufbringt und anschließend das Fasermaterial färbt oder bedruckt.

8. Verwendung nach Anspruch 5 gemeinsam mit bekannten N-Methylol-Harnstoffverbindungen.

## Claims

1. N-Methylol derivatives of polycondensation products containing quaternary N atoms obtained from
A) basic ureas of the formula
HN(R¹)-CO-N(R²)-X¹-N(R³,R⁴) (I),
in which
X¹ denotes C₂-C₄-alkylene,
R¹ and R², independently of one another, represent hydrogen or C₁-C₄-alkyl or R¹ and R² together denote 1,2-ethylene or trimethylene and
R³ and R⁴, x independently of one another, represent hydrogen, C₁-C₄-alkyl or C₂-C₄-hydroxyalkyl, and R³ can furthermore denote the radical -X¹-N(R²)-CO-NHR¹ and R³ and R⁴ together can denote one of the radicals -CH₂CH₂-O-CH₂CH₂- or -CH₂CH₂-N(R⁵)-CH₂CH₂- where R⁵ denotes hydrogen, C₁-C₄-alkyl, C₂-C₄-hydroxyalkyl, the radical -X¹-N(R²)-CO-NHR¹ or the radical -CO-NH₂,
B) polyamines of the formula
(R⁶, R⁷)N-X²-N(R⁸,R⁹) (II),
in which
X² denotes C₂-C₆-alkylene which may be interrupted by -0-, -NR¹⁰- where R¹⁰ represents hydrogen or C₁-C₄-alkyl or by -NH-CO-NH-, and
R⁶, R⁷, R⁸ and R⁹, independently of one another, represent hydrogen, C₁-C₄-alkyl or C₂-C₄-aminoalkyl and R⁶ and R⁷ together and, independently thereof, R⁸ and R⁹ together or R⁶ and R⁸ together and, independently thereof, R⁷ and R⁹ together can denote 1,2-ethylene or trimethylene, and
C) bifunctional alkylating agents.

2. N-Methylol derivatives of polycondensation products according to Claim 1, in which the basic ureas used are those of the formula
H₂N-CO-NH-X¹-N(R¹³,R¹⁴) (III)
in which
X¹ denotes C₂-C₄-alkylene and
R¹³ and R¹⁴, xindependently of one another, denote C₁-C₃-alkyl and R¹³ furthermore can denote -X¹-NH-CO-NH₂.

3. N-Methylol derivatives of polycondensation products according to Claim 1, in which the polyamines used are those of the formula
(R¹⁶,R¹⁷)N-X²-N(R¹⁸,R¹⁹) (IV)
in which
X² denotes C₂-C₆-alkylene which may be interrupted by -O-, -NR¹⁰ - where R¹⁰ represents hydrogen or C₁-C₄-alkyl or by -NH-CO-NH-, and
R¹⁶, R¹⁷, R¹⁸ and R¹⁹, independently of one another, denote hydrogen or C₁-C₃-alkyl.

4. Process for preparing the N-methylol derivatives of polycondensation products according to Claim 1, characterized in that A) basic ureas, B) polyamines and C) bifunctional alkylating agents are made to react in an A/B/C molar ratio of 0.5-2.5:1:1.0-3.2 at 40 to 130°C in the presence of water or polar organic solvents, and the reaction products are then reacted with formaldehyde or formaldehyde-releasing compounds at 40 to 110°C and pH values of 8 to 11, 0.5-1.2 mol of formaldehyde being used per urea group -N(R²)-CO-NH(R¹).

5. Use of the compounds according to Claim 1 for improving the wet fastness properties of dyeings and prints obtained with reactive and direct dyestuffs on cellulose and cellulose blend fabrics.

6. Use according to Claim 5, characterized in that the compounds according to Claim 1 are applied to the dyed or printed fibre materials in an aftertreatment process.

7. Use according to Claim 5, characterized in that the compounds according to Claim 1 are applied to the undyed fibre material in a pretreatment process and the fibre material is then dyed or printed.

8. Use according to Claim 5 together with known N-methylol-urea compounds.

## Revendications

1. Dérivés N-méthylol de polycondensats ayant des atomes d'azote quaternaires, comprenant
A) des urées basiques de formule
HN(R¹)-CO-N(R²)-X¹-N(R³,R⁴) (I),
dans laquelle
X¹ xreprésente un alkylène en C₂-C₄,
R¹ et R² représentent, indépendamment l'un de l'autre, un hydrogène ou un alkyle en C₁-C₄, ou R¹ et R² représentent conjointement un 1,2-éthylène ou un triméthylène, et
R³ et R⁴ représentent, indépendamment l'un de l'autre, un hydrogène, un alkyle en C₁-C₄ ou un hydroxyalkyle en C₂-C₄, où R³ peut en outre représenter le radical -X¹-N(R²)-CO-NHR¹ et où R³ et R⁴ peuvent représenter conjointement l'un des radicaux -CH₂CH₂-O-CH₂CH₂- ou -CH₂CH₂N(R⁵)-CH₂CH₂-, R⁵ représentant un hydrogène, un alkyle en C₁-C₄, un hydroxyalkyle en C₂-C₄, le radical -X¹-N(R²)-CO-NHR¹ ou le radical -CO-NH₂,
B) des polyamines de formule
(R⁶,R⁷)N-X²-N(R⁸,R⁹) (II),
dans laquelle
X² représente un alkylène en C₂-C₆ pouvant être interrompu par -O-, -NR¹⁰-, où R¹⁰ désigne un hydrogène ou un alkyle en C₁-C₄, ou par -NH-CO-NH-, et
R⁶, R⁷, R⁸ et R⁹ désignent, indépendamment les uns des autres, un hydrogène, un alkyle en C₁-C₄ ou un aminoalkyle en C₂-C₄, et R⁶ et R⁷, conjointement et indépendamment de cela, R⁸ et R⁹, conjointement, ou R⁶ et R⁸, conjointement et indépendamment de cela, et R⁷ et R⁹, conjointement, peuvent représenter un 1,2-éthylène ou un triméthylène, et
C) des agents d'alkylation bifonctionnels.

2. Dérivés N-méthylol de polycondensats selon la revendication 1, dans lesquels on utilise, en tant qu'urées basiques, celles de formule
H₂N-CO-NH-X¹-N(R¹³, R¹⁴) (III)
dans laquelle
X¹ représente un alkylène en C₂-C₄, et
R¹³ et R¹⁴ représentent, indépendamment l'un de l'autre, un alkyle en C₁-C₃ et R¹³ peut en outre représenter -X¹-NH-CO-NH₂.

3. Dérivés N-méthylol de polycondensats selon la revendication 1, dans lesquels on utilise, en tant que polyamines, celles de formule
(R¹⁶,R¹⁷)N-X²-N(R¹⁸,R¹⁹) (IV)
dans laquelle
X² représente un alkylène en C₂-C₆ pouvant être interrompu par -O-, -NR¹⁰-, où R¹⁰ désigne un hydrogène ou un alkyle en C₁-C₄, ou par -NH-CO-NH-, et
R¹⁶, R¹⁷, R¹⁸ et R¹⁹ représentent, indépendamment les uns des autres, un hydrogène ou un alkyle en C₁-C₃.

4. Procédé de préparation des dérivés N-méthylol de polycondensats selon la revendication 1, caractérisé en ce que l'on fait réagir A) des urées basiques, B) des polyamines et C) des agents d'alkylation bifonctionnels en un rapport molaire A:B:C = 0,5-2,5:1:1,0-3,2 entre 40 et 130°C en présence d'eau ou de solvants organiques polaires, et on met ensuite à réagir avec du formaldéhyde ou des composés libérant du formaldéhyde entre 40 et 110°C et à des pH de 8 à 11, en utilisant de 0,5 à 1,2 mol de formaldéhyde par groupe urée -N(R²)-CO-NH(R¹),

5. Utilisation des composés selon la revendication 1 en vue d'améliorer les solidités à l'état mouillé de teintures et d'impressions avec des colorants réactifs et directs sur de la cellulose et des tissus mixtes à base de cellulose.

6. Utilisation selon la revendication 5, caractérisée en ce que l'on applique les composés selon la revendication 1 dans un procédé de post-traitement sur les matières fibreuses teintes ou imprimées.

7. Utilisation selon la revendication 5, caractérisée en ce que l'on applique les composés selon la revendication 1 dans un procédé de prétraitement sur la matière fibreuse non teinte, et on teint ou imprime ensuite la matière fibreuse.

8. Utilisation selon la revendication 5 conjointement avec des composés N-méthylolurée.
